# EUROPÄISCHE PATENTSCHRIFT

(11) **EP 2 187 058 B1**
(45) Veröffentlichungstag und Bekanntmachung des Hinweises auf die Patenterteilung: **13.12.2017**
(21) Anmeldenummer: 09012729.1
(22) Anmeldetag: 08.10.2009
(51) Int. Cl.: F04C 18/12, F04C 29/00

(54) **Vakuumpumpe mit Festlageranordnung**
Vacuum pump with fixed bearing assembly
Pompe à vide dotée d'un agencement de palier fixe

(30) Priorität: 18.11.2008 DE 102008057854
(43) Veröffentlichungstag der Anmeldung: 19.05.2010
(73) Patentinhaber: PFEIFFER VACUUM GMBH, 35614 Asslar (DE)
(72) Erfinder: Siamak, Rafii, Dr., 35630 Ehringshausen (DE); Wagner, Jürgen, 57629 Müschenbach (DE)
(74) Vertreter: Manitz Finsterwald Patentanwälte PartmbB

(56) Entgegenhaltungen:
- EP-A2- 1 890 041
- GB-A- 2 006 343

## Beschreibung

Die Erfindung betrifft eine Drehkolbenvakuumpumpe mit einer Welle, einem auf dieser angeordneten Kolben, einem Gehäuse, und einer Festlageranordnung, welche ein Vorspannelement und ein Wälzlager aufweist, welches einen Innenring, einen Außenring und Wälzkörper umfasst.

Zu den Drehkolbenvakuumpumpen gehören beispielsweise die zweiwelligen Wälzkolbenpumpen. Die beiden Wellen solcher Vakuumpumpen tragen meist zweiflügeligen Kolben, deren Querschnitt nahezu achtförmig ist. Die Wellen sind in der Regel durch ein Synchrongetriebe miteinander gekoppelt, so dass die Kolben berührungslos und nur mit engem Spalt aneinander vorbei bewegt werden. Diese Vakuumpumpen sind wesentlich charakterisiert durch ihre Vakuumdaten, worunter Saugvermögen, erreichbarer Enddruck und ähnliches verstanden werden. Im Schöpfraum befindet sich kein Dichtfluid. Daher strömt immer Gas durch die Spalte zwischen den Kolben und den Gehäusewandungen beziehungsweise zwischen den Kolben. Die Güte dieser Spalte bestimmt daher die Vakuumdaten und damit die Güte der Vakuumpumpe.

Zum Erreichen enger Spalte, durch die nur wenig Gas entgegen der Pumprichtung strömen kann, sind eine aufwändige Konstruktion und eine hohe Präzision notwendig. Diese Präzision bezieht sich auf alle Bauteile, die die Position der Welle und damit der Kolben im Gehäuse festlegen. Zu diesen Bauteilen gehört die Festlageranordnung, welche wenigstens ein Wälzlager umfasst. In dieser Festlageranordnung bestimmt das Wälzlager die Position der Welle in axialer Richtung.

Auf der anderen Seite wird angestrebt, eine möglichst einfache Konstruktion einzusetzen, um eine preiswerte Herstellung und einen einfachen Service zu erzielen.
Daraus ergibt sich die Aufgabe, eine Drehkolbenvakuumpumpe vorzustellen, die gute Vakuumdaten bei einer einfacher Konstruktion aufweist.
Gelöst wird diese Aufgabe durch eine Drehkolbenvakuumpumpe mit den Merkmalen des ersten Anspruches. Die Ansprüche 2 bis 4 geben vorteilhafte Weiterbildung an.
Erfindungsgemäß ist zwischen dem Lageraußenring und dem Vorspannelement ein Ausgleichselement vorgesehen. Dieses ist derart gestaltet, dass es zusammen mit dem Vorspannelement in einem Masstoleranzbereich eine in einem Wälzlagervorspannungsbereich liegende Kraft bewirkt. Dieses Ausgleichselement ermöglicht es, den Lageraußenring genau bestimmt vorzuspannen. Hierdurch wird die Position der Welle sehr exakt festgelegt, wodurch in der Folge kleinstmöglich Spalte realisiert werden. Da die Vorspannkraft in einem Masstoleranzbereich konstant ist, können Bauteiltoleranzen ohne weitere Maßnahmen ausgeglichen werden. Hierdurch vereinfacht sich die Konstruktion, die Montage und der Service der Festlageranordnung. Darüber hinaus spielen Temperatureffekte, welche in Vakuumpumpen auftreten, keine Rolle mehr. Selbst bei einer unterschiedlichen Wärmeausdehnung von Welle und Rotor einerseits und Gehäuse andererseits bleibt die Vorspannkraft konstant. Die Konstanz der Vorspannung wirkt sich sehr vorteilhaft auf die Lebensdauer der Wälzlager und die Geräuschentwicklung der Drehkolbenvakuumpumpe aus.
Ein konstruktiv besonders einfaches Bauelement ist ein ringförmiges Federelement, welches Teil des Ausgleichelements ist. Dieses ringförmige Federelement wird mit dem Lageraußenring in eine gemeinsame Bohrung im Gehäuse der Drehkolbenvakuumpumpe eingelegt und übt eine entlang des Umfangs des Lageraußenrings gleichmäßige Vorspannung aus. Es vereinfacht überdies durch seine einfache Bauform den Serice sehr. Das ringförmige Federelement umfasst einen hohlen Ring mit einem c-förmigen Querschnitt. Dieser Querschnitt bewirkt auf konstruktiv einfache Weise, dass über einen weiten Masstoleranzbereich eine im Wälzlagervorspannungsbereich liegende Kraft auf den Außenring ausgeübt wird. Außerdem handelt es sich um ein sehr kompaktes Bauteil, so dass es wenig Bauraum benötigt.
In einer anderen Weiterbildung ist das Wälzlager ein Rillenkugellager. Dies spart Kosten und hilft, die Position der Welle genau festzulegen. Außerdem wirkt es sich aufgrund der geringen Lagerreibung günstig auf die Wartungsintervalle und damit auf den Service der Drehkolbenvakuumpumpe aus.
In einer wiederum anderen Weiterbildung weist die Drehkolbenvakuumpumpe eine zweite Welle und ein Synchrongetriebe mit schrägverzahnten Synchronrädern auf. Durch die schrägverzahnten Synchronräder wird die Geräuschbildung durch die Drehkolbenvakuumpumpe erheblich vermindert. Gleichzeitig entstehen aber axiale Kräfte, die parallel der beiden Wellen jedoch in unterschiedlicher Richtung wirken. Durch das Ausgleichselement bleibt die Vorspannung in den Festlageranordnungen beider Wellen erhalten, so dass die Vorteile der schrägverzahnten Synchronräder genutzt werden können, ohne Nachteile bei der Konstruktion der Festlageranordnungen in Kauf nehmen zu müssen.
Die Vorteile der Festlageranordnung mit Ausgleichselement lassen sich weiter vertiefen, indem ein Ausgleichsring zwischen Innenring des Wälzlagers und Welle angeordnet ist. Hierdurch ist eine noch genauere Festlegung der Welle möglich, ebenso werden die erwähnten Schwierigkeiten durch unterschiedliche Wärmeausdehnung stark gemildert.

Anhand eines Ausführungsbeispiels soll die Erfindung mit ihren Vorteilen näher erläutert werden. Es zeigen:

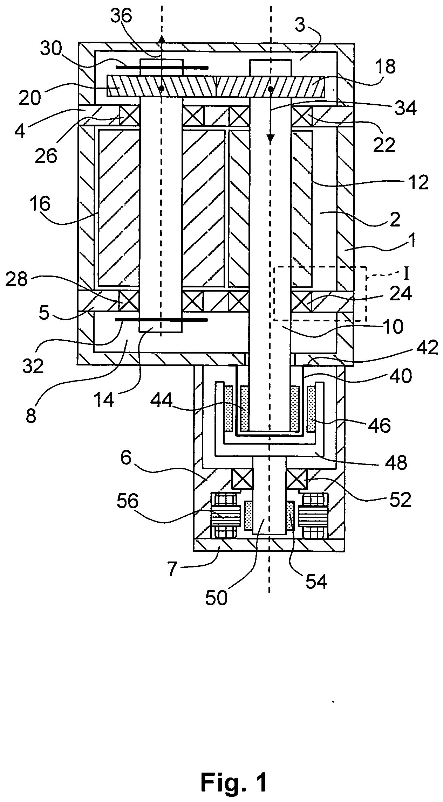

- Fig. 1:: Prinzipdarstellung einer zweiwelligen Vakuumpumpe, in der Wellenebene geschnitten.
- Fig. 2:: Schnitt durch die erfindungsgemäße Festlageranordnung.
- Fig. 3:: Kraft-Weg-Kennlinie des Ausgleichselements.

Das Ausführungsbeispiel bezieht sich auf eine zweiwellige Drehkolbenvakuumpumpe. Diese besitzt ein Gehäuse 1, in welchem sich ein Schöpfraum 2 befindet. Der Schöpfraum wird von einer ersten Welle 10 und einer zweiten Welle 14 durchsetzt. Die erste Welle trägt einen ersten Kolben 12 und die zweite Welle einen zweiten Kolben 16, so dass diese bei Drehung der Wellen berührungsfrei und nur mit engem Spalt aneinander vorbei bewegt werden.

Ein erstes Lagerschild 4 und ein zweites Lagerschild 5 begrenzen den Schöpfraum in Richtung der Wellenenden. Vom Schöpfraum aus gesehen jenseits des ersten Lagerschildes 4 befindet sich ein Getrieberaum 3, in welchen die Enden der Wellen hineinragen. Auf diesen Wellenenden sind ein erstes Synchronrad 18 und ein zweites Synchronrad 20 montiert, welche miteinander im Eingriff stehen und so die Drehbewegung der ersten Welle auf die zweite Welle übertragen. Im Getrieberaum befindet sich ein Schmiermittelvorrat, in den eine erste Schleuderscheibe 30 eintaucht. Bei Drehung der Welle verteilt die Schleuderscheibe durch Fliehkraftwirkung Schmiermittel im Getrieberaum und sorgt so für eine gleichmäßige Schmierung der Lagerstellen der Wellen. Diese Lagerstellen sind in Lagerschilden angeordnet.

Im ersten Lagerschild zwischen Getrieberaum und Schöpfraum sind die Loslageranordnung 22 der ersten Welle und die Loslageranordnung 26 der zweiten Welle vorgesehen. Im zweiten Lagerschild 5 sind die Festlageranordnung 24 der ersten Welle und die Festlageranordnung 28 der zweiten Welle untergebracht.

Vom Schöpfraum aus gesehen jenseits des zweiten Lagerschildes 5 folgt der Zwischenraum 8. In diesem endet die zweite Welle. Sie trägt auf ihrem Ende eine zweite Schleuderscheibe 32, die wie die erste Schleuderscheibe wirkt. Sie versorgt die Festlageranordnungen 24 und 28 mit Schmiermittel, welches sich in dem Zwischenraum befindet. Die erste Welle durchsetzt den Zwischenraum vollständig und endet in einem Spalttopf 40, welcher mittels eines Spalttopfflansches 42 am Gehäuse befestigt ist. Das im Spalttopf befindliche Wellenende trägt Innenmagnete 44. Sie wirken mit an einem außerhalb des Spalttopfes angeordneten Magnetträger 48 befestigten Außenmagneten 46 zusammen. Der Magnetträger ist mit der Motorwelle 50 verbunden, so dass Motorwelle und erste Welle magnetisch miteinander gekoppelt sind. Die Motorwelle ist in einem Motorlager 52 drehbar gelagert. Auf der Motorwelle angebrachte Motormagnete 54 wirken mit elektrischen Spulen derart zusammen, dass im bestromten Zustand der Spulen die Motorwelle und in der Folge erste und zweite Welle in Drehung versetzt werden.

Die Synchronräder 18 und 20 sind schräg verzahnt, wodurch die Geräuschbildung im Getriebe erheblich reduziert wird. Durch die Schrägverzahnung entstehen jedoch Kräfte entlang den Wellen. Die Kraftrichtung beider Wellen sind dabei entgegengesetzt zueinander ausgerichtet. Dies ist durch Pfeile dargestellt, wobei die erste Kraftrichtung 34 der ersten Welle und die zweite Kraftrichtung 36 der zweiten Welle zugeordnet ist.

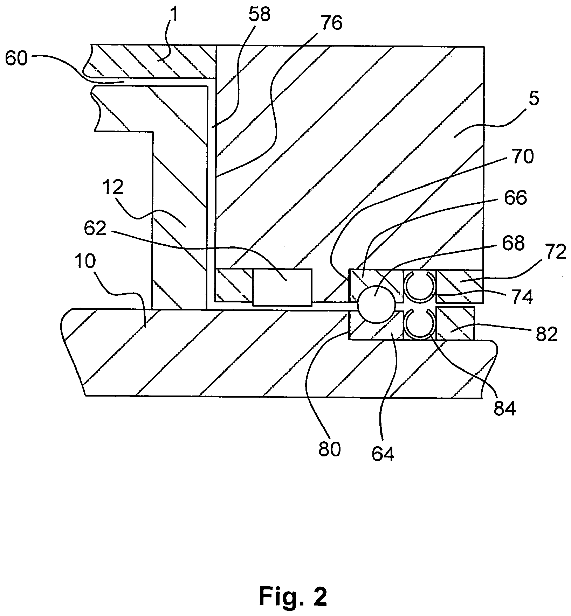

Die zweite Abbildung, Figur 2, zeigt den Ausschnitt I der Festlageranordnung 24 der ersten Welle im Schnitt. Diese Festlageranordnung befindet sich im Lagerschild 5. Sie umfasst als ruhende Bauteile den Lageraußenring 66, das Vorspannenelement 72 und das Ausgleichselement 74. Zudem ist zwischen der Festlageranordnung und dem Kolben 12 eine Dichtung 62 angeordnet. Dies kann beispielsweise eine dynamische Dichtung in Form einer Labyrinthdichtung sein. Auf der Welle 10 sind die bewegten Teile der Festlageranordnung angeordnet, nämlich der Lageraußenring 64, das wellenseitige Ausgleichselement 84 und das wellenseitige Vorspannelement 84. Zwischen Lageraußenring und Lagerinnenring befinden sich Wälzkörper 68. Das von Lageraußenring, Lagerinnenring und Wälzkörpern gebildete Wälzlager ist als Rillenkugellager ausgebildet.

In Figur 2 sind die kritischen Spalte eingezeichnet. Zum einen ist dies der Spalt 58 zwischen Rotor und Lagerschild, zum anderen der Spalt 60 zwischen Rotor und Gehäuse 1. Die Weite des Spaltes 58 wird von der Güte der axialen Wellenposition bestimmt. Die besondere Güte ergibt sich aus dem Zusammenwirken der Bauteile der erfindungsgemäßen Festlageranordnung.

Der Lageraußenring grenzt mit einer axialen Endfläche an den Anschlag 70. Das Vorspannelement 72 bewirkt eine Kraft, die in Richtung dieses Anschlags gerichtet ist. Diese Kraft wird durch das Ausgleichselement 74 auf den Lageraußenring übertragen. Die Position des Anschlags in Bezug zur rotorseitigen Lagerschildaußenfläche 76 ist der Fertigungsgenauigkeit unterworfen und variiert von Vakuumpumpe zu Vakuumpumpe. Gleiches gilt für die axiale Dicke des Lageraußenringes und des Vorspannelements. Diese Ungenauigkeiten würden ohne das Ausgleichselement zu Unterschieden beim Wert der Vorspannung führen. Das Ausgleichselement bewirkt jedoch, dass trotz der Ungenauigkeiten in jedem Falle eine im Toleranzbereich des Wälzlagers liegende Vorspannung erreicht wird. Dies führt zu einem ruhigeren Lauf, zu einer erhöhten Lebensdauer und zu einer exakten Positionierung des Wälzlagers. Somit wird er möglich, den Spalt 58 bestmöglich einzustellen.

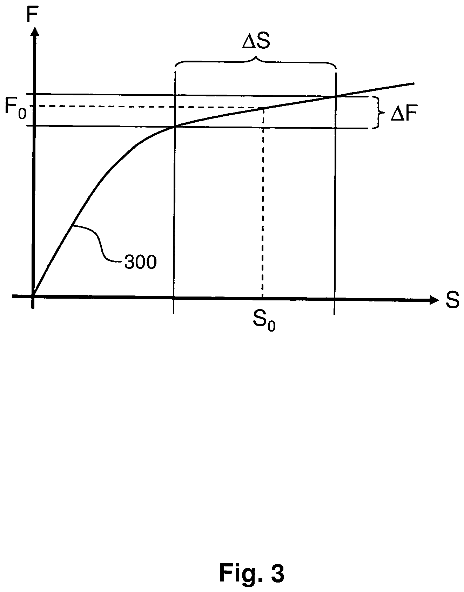

Das Ausgleichselement weist einen c-förmigen Querschnitt auf und wird durch die vom Vorspannelement erzeugte Kraft verformt. Der c-förmige Querschnitt hat sich als sehr vorteilhaft erwiesen, da er eine besonders günstige Kraft-Weg-Kennlinie ergibt. Die Kennlinie wird weiter unten im Zusammenhang mit Figur 3 diskutiert. Das Ausgleichselement ist aus einem Edelstahl hergestellt. Dieses Material ist günstig für die Federkennlinie und vorteilhaft in einer Vakuumpumpe, da das Ausgleichselement so beständig gegen gepumpte Gase ist.

Auch wellenseitig ist ein Ausgleichselement 84 angeordnet. Dieses ist nicht zwingend notwendig, um die Vorteile der Erfindung zu erreichen, vertieft sie jedoch. Die Funktions- und Wirkungsweise ist analog der des Ausgleichselements 74. Das wellenseitige Ausgleichselement überträgt die durch ein wellenseitiges Vorspannelement 82 erzeugte Kraft auf den Lagerinnenring 64 und spannt diesen gegen den wellenseitigen Anschlag 80 vor. Auch dieses Ausgleichselement besitzt einen c-förmigen Querschnitt.

In Figur 3 ist die Kraft-Weg-Kennlinie 300 des Ausgleichselements dargestellt. Sie steigt zunächst nahezu linear an und knickt dann ab. Anschließend verläuft die Kennlinie mit geringer Steigung. Das Ausgleichselement wird nun erfindungsgemäß soweit verformt, dass auf jeden Fall dieser Bereich geringer Steigung genutzt wird. Die Absolutwerte der Kennlinie und ihrer Steigung hängen von der Baugröße des Wälzlagers und der Vakuumpumpe ab. Unter anderem durch deren Abmessungen und Massen ist die Größe des Wälzlagers vorgegeben. Der Hersteller des Wälzlagers gibt einen Toleranzbereich ΔF um den Idealwert F₀ vor, in welchem die Vorspannung liegen darf. Die Gestaltung des Ausgleichselements erfolgt nun derart, dass die Kraft-Weg-Kennlinie um einen Zielwert S₀ herum so flach verläuft, dass aus einem Wegwert im Bereich ΔS ein Kraftwert im Bereich ΔF folgt. Der Bereich ΔS deckt den Toleranzbereich ab, der sich aus Maßabweichungen der Bauteile bei ihrer Herstellung und Maßabweichungen durch Wärmeeffekte ergibt.

## Patentansprüche

1. Drehkolbenvakuumpumpe mit einer Welle (10, 14), einem auf dieser angeordneten Kolben (12, 16), einem Gehäuse (1), und einer Festlageranordnung (24; 28), welche ein Vorspannelement (72) und ein Wälzlager aufweist, welches einen Innenring (64), einen Außenring (66) und Wälzkörper (68) umfasst, **dadurch gekennzeichnet,**
**dass** zwischen Vorspannelement und Außenring ein Ausgleichselement (74) angeordnet ist, welches derart gestaltet ist, dass es zusammen mit dem Vorspannelement in einem Maßtoleranzbereich (ΔS) eine in einem Wälzlagervorspannungsbereich (ΔF) liegende Kraft bewirkt und
**dass** das Ausgleichselement (74) ein ringförmiges Federelement umfasst, welches einen hohlen Ring mit C-förmigem Querschnitt aufweist.

2. Drehkolbenvakuumpumpe nach einem vorhergehenden Ansprüche, **dadurch gekennzeichnet, dass** das Wälzlager ein Rillenkugellager ist.

3. Drehkolbenvakuumpumpe nach einem der vorhergehenden Ansprüche, **dadurch gekennzeichnet, dass** sie eine zweite Welle (14) und ein Synchrongetriebe mit schrägverzahnten Synchronrädern (18, 20) aufweist.

4. Drehkolbenvakuumpumpe nach einem vorhergehenden Ansprüche, **dadurch gekennzeichnet, dass** in axialer Richtung zwischen Innenring (64) des Wälzlagers und Welle (10; 14) ein Ausgleichselement (84) angeordnet ist.

## Claims

1. A rotary piston vacuum pump comprising a shaft (10, 14); a piston (12, 16) arranged thereat; a housing (1); and a fixed-bearing arrangement (24; 28) which has a preload element (72) and a roller element bearing which comprises an inner race (64), an outer race (66) and a roller element body (68), **characterized in that**
a compensation element (74) is arranged between the preload element and the outer race and is configured such that, together with the preload element, it effects a force, disposed in a roller element bearing preload range (ΔF), in a dimension tolerance range (ΔS); and
**in that** the compensation element (74) comprises an annular spring element which has a hollow ring with a C-shaped cross-section.

2. A rotary piston vacuum pump in accordance with the preceding claim, **characterized in that** the roller element bearing is a grooved ball bearing.

3. A rotary piston vacuum pump in accordance with one of the preceding claims, **characterized in that** it has a second shaft (14) and a synchromesh gear comprising helical synchronized wheels (18, 20).

4. A rotary piston vacuum pump in accordance with any one of the preceding claims, **characterized in that** a compensation element (84) is arranged in an axial direction between the inner race (64) of the roller element bearing and the shaft (10; 14).

## Revendications

1. Pompe à vide à piston rotatif comportant un arbre (10, 14), un piston (12, 16) agencé sur celui-ci, un boîtier (1) et un agencement de palier fixe (24 ; 28) qui comprend un élément de précontrainte (72) et un palier à roulement qui comprend une bague intérieure (64), une bague extérieure (66) et des corps roulants (68),
**caractérisée en ce que**
un élément de compensation (74) est agencé entre l'élément de précontrainte et la bague extérieure, qui est réalisé de manière à provoquer, conjointement avec l'élément de précontrainte, une force située dans une zone de précontrainte de palier à roulement (ΔF) dans une plage de tolérance dimensionnelle (ΔS), et
**en ce que** l'élément de compensation (74) comprend un élément élastique annulaire qui comprend un anneau creux présentant une section transversale en forme de C.

2. Pompe à vide à piston rotatif selon l'une des revendications précédentes,
**caractérisée en ce que**
le palier à roulement est un palier rainuré à billes.

3. Pompe à vide à piston rotatif selon l'une des revendications précédentes,
**caractérisée en ce que**
elle comprend un second arbre (14) et une transmission synchronisée comportant des roues synchronisées (18, 20) à denture hélicoïdale.

4. Pompe à vide à piston rotatif selon l'une des revendications précédentes,
**caractérisée en ce que**
un élément de compensation (84) est prévu en direction axiale entre la bague intérieure (64) du palier à roulement et l'arbre (10 ; 14).
